# EUROPÄISCHE PATENTSCHRIFT

(11) **EP 2 060 165 B1**
(45) Veröffentlichungstag und Bekanntmachung des Hinweises auf die Patenterteilung: **24.08.2011**
(21) Anmeldenummer: 08163241.6
(22) Anmeldetag: 29.08.2008
(51) Int. Cl.: A01D 41/127

(54) **Selbstfahrende landwirtschaftliche Erntemaschine**
Self-propelled agricultural harvester
Moissonneuse agricole automatique

(30) Priorität: 16.11.2007 DE 102007055073
(43) Veröffentlichungstag der Anmeldung: 20.05.2009
(73) Patentinhaber: CLAAS Selbstfahrende Erntemaschinen GmbH, 33428 Harsewinkel (DE)
(72) Erfinder: Behnke, Willi, 33803 Steinhagen (DE); Bußmann, Christoph, 33428 Harsewinkel (DE)

(56) Entgegenhaltungen:
- EP-A- 1 321 025
- EP-A- 1 650 715
- DE-A1-102004 059 543
- US-A- 4 458 471
- US-A- 4 487 002
- US-A- 4 513 562

## Beschreibung

Die Erfindung betrifft eine selbstfahrende andwirtschaftliche Erntemaschine nach dem Oberbegriff des Anspruchs 1.

In der EP 1 321 025 A1 ist eine als Mähdrescher ausgebildete selbstfahrende landwirtschaftliche Erntemaschine mit einer automatischen Steuereinrichtung zur Regelung der Vorfahrtgeschwindigkeit offenbart. Die Steuereinrichtung verändert die Vorfahrtgeschwindigkeit zur Steuerung des Durchsatzes des Mähdreschers und wird aktiviert, sobald eine Schichthöhenerfassungseinrichtung den Eintritt von Erntegut in einer Fördereinrichtung des Mähdreschers nachweist.

Aus der seitens der Anmelderin eingereichten DE 10 2004 059 543 A1 ist eine selbstfahrende landwirtschaftliche Erntemaschine bekannt, bei der die Fahrgeschwindigkeit mittels eines Vorfahrtreglers in Abhängigkeit von unterschiedlichen Betriebssituationen nach unterschiedlichen Fahrstrategien geregelt wird. Die Vorteile und Wirkungsweise der Fahrgeschwindigkeitsregelung mittels eines Vorfahrtreglers sind in der genannten Deutschen Patentanmeldung beschrieben.

Versuche in der Praxis haben jedoch ergeben, dass eine Fahrgeschwindigkeitsregelung mittels eines Vorfahrtreglers zur Steuerung des Durchsatzes der selbstfahrenden landwirtschaftlichen Erntemaschine durch unterschiedliche Erntegutparameter und/oder Arbeitsparameter der Erntemaschine begrenzt wird. So ist es beispielweise so, dass bei sehr dünnen Erntegutbeständen die Durchsatzmenge abnimmt und der Vorfahrtregler zwangsläufig die Fahrgeschwindigkeit erhöhen würde. Um die Fahrstabilität und somit die Sicherheit der Arbeitsmaschine zu gewährieisten, ist diese jedoch nur mit einer bestimmten Maximalgeschwindigkeit während des Arbeitseinsatzes betreibbar. Sofern nun die Erhöhung der Fahrgeschwindigkeit die maximal zulässige Arbeitsgeschwindigkeit erreicht, kann der Vorfahrtregler die Fahrgeschwindigkeit nicht weiter erhöhen. Da der Bediener der Arbeitsmaschine nun feststellt, dass der gewünschte Durchsatz nicht dem aktuell erzielten Durchsatz entspricht, wird er versuchen, die Arbeitsparameter der Erntemaschine gemäß, des aktuelien Durchsatzes anzupassen, um das Arbeitsergebnis nicht negativ zu beeinflussen. Dies erfordert jedoch ein sehr großes Fachwissen des Bedieners. Zudem ist die maximal zulässige Arbeitsgeschwindigkeit nur eines von einer Mehrzahl von begrenzenden Merkmalen für die Fahrgeschwindigkeitsregelung mittels des Vorfahrtreglers, so dass der Bediener vor dem Problem steht, dass er nicht weiß, welche Arbeitsparameter der Erntemaschine er vorteilhaft anpasst, um ein optimales Arbeitsergebnis zu erreichen.

Aufgabe der vorlegenden Erfindung ist es, die beschriebenen Nachteile des Standes der Technik zu vermeiden und insbesondere eine selbstfahrende landwirtschaftliche Erntemaschine gemäß des Oberbegriffs des Anspruchs 1 derart weiterzubilden, dass der Bediener der Erntemaschine bei einer Begrenzung der Fahrgeschwindigkeitsregelung mittels eines Vorfahrtreglers von der Optimierung der Arbeitsparameter der Erntemaschine entlastet und gleichzeitig ein optimales Arbeitsergebnis erzielt wird.

Diese Aufgabe wird erfindungsgemäß durch die Merkmale des Anspruchs 1 gelöst. Dadurch, dass eine Steuer- und Regeleinheit der Erntemaschine im Falle einer begrenzten Fahrgeschwindigkeitsregelung automatisch zumindest einen Arbeitsparameter zumindest eines Arbeitsorgans an einen aufgrund der begrenzten Fahrgeschwindigkeitsregelung geänderten Erntegutdurchsatz anpasst, wird der Bediener vollständig von der Optimierung der Arbeitsparameter der Erntemaschine entlastet und es wird gleichzeitig stets ein optimales Arbeitsergebnis erzielt, da der angepasste Arbeitsparameter optimal an den geänderten Erntegutdurchsatz angepasst ist.

Bei einer vorteilhaften Ausführungsform der Erfindung passt die Steuer- und Regeleinheit automatisch eine Mehrzahl von Arbeitsparametern von einer Mehrzahl von Arbeitsorganen an den geänderten Erntegutdurchsatz an, so dass bestenfalls sämtliche Arbeitsorgane der Erntemaschine mit für den aktuellen Erntegutdurchsatz optimalen Arbeitsparametern betrieben werden, wodurch ein optimales Arbeitsergebnis erzielt wird.

Um die Vorteile einer selbsttätigen Fahrgeschwindigkeitsregelung mittels eines Vorfahrtreglers optimal nutzen zur können, setzt die Steuer- und Regeleinheit nach der Beendigung der begrenzten Fahrgeschwindigkeitsregelung automatisch den zumindest einen angepssten Arbeitsparameter des zumindest einen Arbeitsorgans wieder auf den ursprünglich eingestellten Parameterwert zurück. Somit sind die Arbeitsparameter sowohl bei der unbegrenzten Fahrgeschwindigkeitsregelung als auch bei der begrenzten Fahrgeschwindigkeitsregelung stets an den aktuellen Erntegutdurchsatz angepasst. Unter Beendigung der begrenzten Fahrgeschwindigkeitsregelung ist zu verstehen, dass sobald der begrenzend wirkende Erntegutparameter und/oder Arbeitsparameter nicht mehr vorliegt und somit auch nicht mehr begrenzend wirkt, die selbsttätige unbegrenzte Fahrgeschwindigkeitsregelung mittels des Vorfahrtreglers wieder aufgenommen wird.

Vorteilhaft passt die Steuer- und Regeleinheit automatisch insbesondere den Arbeitsparameter des zumindest einen Arbeitsorgans an einen geänderten Erntegutdurchsatz an der aufgrund der Erntegutparameter und/oder Arbeitsparameter begrenzend für die Fahrgeschwindigkeitsregelung mittels des Vorfahrtreglers wirkt, so dass vorteilhaft durch die Anpassung des Arbeitsparameters der begrenzend wirkende Einfluss auf die Fahrgeschwindigkeitsregelung mittels des Vorfahrtreglers wegfällt, und die Steuer- und Regeleinheit wieder zur unbegrenzten Fahrgeschwindigkeitsregelung mittels des Vorfahrtreglers zurückkehren kann.

Um den Bediener der Erntemaschine stets optimal zu informieren, wird ihm bei einer vorteishaften Weiterbildung der Erfindung in einer Anzeigeeinheit unmittelba der Erntegutparameter und/oder der Arbeitsparameter angezeigt, der aktuell die Fahrgeschwindigkeitsregelung mittels des Vörfahrtreglers begrenzt. Zusätzlisch oder alternativ ist denkbar, dass dem Bediener der Erntemaschine in einer Anzeigeinheit unmittelbar der Arbeitsparameter angezeigt wird, der aktuell mittels der Steuer- und Regeleinheit automatisch an den aufgrund der begrenzten Fahrgeschwindigkeitsregelung geänderten Erntegutdurchsatz angepasst wird.

Bei einer vorteilhaften Ausgestaltung der Erfindung ist der zumindest eine anzupassende Arbeitsparameter die Drehzahl zumindest einer Dreschtrommel der landwirtschaftlichen Erntemaschine, so dass die Drehzahl in Abhängigkeit von steigendem oder sinkendem Erntegutdurchsatz erhöht oder verringert werden kann, um ein optimales Dreschergebnis zu erzielen.

Bei einer vorteilhaften Ausgestaltung der Erfindung ist der zumindest eine anzupassende Arbeitsparameter der Abstand zwischen zumindest einer Dreschtrommel und zumindest einem Dreschkorb der landwirtschaftlichen Erntemaschine, so dass der Abstand in Abhängigkeit von steigendem oder sinkendem Erntegutdurchsatz vergrößert oder verkleinert werden kann, um ein optimales Dreschergebnis zu erzielen

Bei einer vorteilhaften Ausgestaltung der Erfindung ist der zumindest eine anzupassende Arbeitsparameter die Drehzahl zumindest eines Abscheide- oder Dresch/Abscheiderotors der landwirtschaftlichen Erntemaschine, so dass die Drehzahl in Abhängigkeit von stehendem oder sinkendem Erntegutdurchsatz erhöht oder verringert werden kann, um ein optimales Abscheide- oder Dresch- und Abscheideergebnis zu erzielen.

Bei einer vorteilhaften Ausgestaltung der Erfindung ist der zumindest eine anzupassende Arbeitsparameter die Drehzahl zumindest eines einer Reinigungseinrichtung zugeordneten Gebläses der landwirtschaftlichen Erntemaschine, so dass die Drehzahl in Abhängigkeit von steigendem oder sinkendem Erntegutdurchsatz erhöht oder verringert werden kann, um ein optimales Reinigungsergebnis zu erzielen.

Bei einer vorteilhaften Ausgestaltung der Erfindung ist der zumindest eine anzupassende Arbeitsparameter die Öffnungsweite zumindest eines einer Reinigungseinrichtung zugeordneten Siebes der landwirtschaftlichen Erntemaschine, so dass die Öffnungsweite in Abhängigkeit von steigendem oder sinkendem Erntegutdurchsatz erhöht oder verringert werden kann, um ein optimales Reinigungsergebnis zu erzielen.

Bei einer vorteilhaften Ausgestaltung der Erfindung ist der die Fahrgeschwindigkeitsregelung mittels des Vorfahrtreglers begrenzende Arbeitsparameter die Fahrgeschwindigkeit, so dass während der Einsatzfahrt stets die Fahrstabilität und somit die Fahrsicherheit der Erntemaschine gewährleistet ist.

Zusätzlich oder alternativ ist der die Fahrgeschwindigkeitsregelung mittels des Vorfahrtreglers begrenzende Arbeitsparameter die Motorauslastung, so dass der Motor beispielsweise nicht überlastet wird und/oder der Motor in einem Drehzahlbereich betrieben werden kann, in der ein möglichst geringer Kraftstoffverbrauch gewährleistet ist. Entsprechend sind dann die Regelgrenzen definiert.

Zusätzlich oder alternativ ist der die Fahrgeschwindigkeitsregelung mittels des Vorfahrtreglers begrenzende Arbeitsparameter der Zustand eines oder mehrerer Arbeitsaggregate und/oder derer Arbeistsmedien, so dass beispielsweise der Antriebsmotor nicht überhitzt wird, falls nicht genügend Kühlflüssigkeit in der Motorkühlanlage vorhanden sein sollte, oder dass beispielsweise eine Hydraulikpumpe nicht trocken läuft, falls nicht genügend Hydrauliköl in dem System zur Verfügung steht, oder dass beispielsweise der Antriebsmotor nicht ausreichend geschmiert wird, falls die Temperatur des Motoröls in einem kritischen Bereich liegt. Die hier genannten Beispiele stehen für eine Vielzahl von Zustände eines oder mehrerer Arbeitsaggregate und/oder derer Arbeitsmedien, die die Fahrgeschwindigkeitsregelung mittels des Vorfahrtreglers begrenzen können. Unter Arbeitsmedien sind die zur Funktion der Arbeitsaggregate benötigten Gase und/oder Flüssigkeiten zu verstehen, wie beispielsweise Druckluft. Hydrauliköl, Schmeröl und/oder Kühlflüssigkeit.

Zusätzlich oder alternativ ist der die Fahrgeschwindigkeitsregelung mittels des Vorfahrtreglers begrenzende Arbeitsparameter die Reinigungsieistung einer Ertegutrelnigungseinrichtung der Erntemaschine, so dass beispielsweise sobald die Reinigungsverlustsensoren detektierten, dass die Reinigungsverluste in einen unerwünschten Bereich ansteigen, die Fahrgeschwindigkeitsregelung mittels des Vorfahrtreglers derart begrenzt wird, dass die Fahrgeschwindigkeit nicht weiter erhöht wird, um die die Reinigunsssiebe belastende Erntegutmenge zu begrenzen- Das Ansteigen der Reinigungsverluste steht hier beispielhaft für eine Vielzahl von die Reinigungsleistung einer Erntegutreinigungseinrichtung begrenzenden Zuständen, Zusätzlich oder alternativ ist der die Fahrgeschwindigkeitsregelung mittels des Vorfahrtreglers begrenzende Arbeitsparameter die Abscheideleistung einer Erntegutabscheideeinrichtung der Erntemaschine, so dass beispielsweise sobald die Abscheideverlustsensoren detektieren, dass die Abscheideverluste in einen unerwünschten Bereich ansteigen, die Fahrgeschwindigkeitsregelung mittels des Vorfahrtreglers derart begrenzt wird, dass die Fahrgeschwindigkeit nicht weiter erhöht wird, um die die Abscheideeinrichtung belastende Erntegutmenge zu begrenzten. Das Ansteigen der Abscheideverluste steht hier beispielhaft für eine Vielzahl von die Abscheideleistung einer Erntegutabscheideeinrichtung begrenzenden Zuständen.

Zusätzlich oder alternativ ist der die Fahrgeschwindigkeitsregelung mittels des Vorfahrtreglers begrenzende Arbeitsperameter ein Überladeprozess des Erntegutes in ein externes Transportfahrzeug. Um Erntegutverluste beim Überladeprozess des Erntegutes in ein externes Transportfahrzeug zu vermelden, ist es wichtig, dass die Erntemaschine und das Transportfahrzeug eine nahezu gleich hohe Fahrgeschwindigkeit aufweisen, so dass das Erntegut gezielt überladen werden kann. Da die Fahrgeschwindigkeit somit während des Überladens begrenzt ist, kann der vorfahrtregler auch keine Fahrgeschwindigkeitsregelung beispielsweise, in Abhängigkeit des Erntegutbestandes vornehmen, so dass die Regelung somit durch den Überladeprozess begrenzt wird.

Zusätzlich oder alternativ ist der die Fahrgeschwindigkeitsregelung mittels des Vorfahrtreglers begrenzende Arbeitsparameter die seitens der Erntemaschine erfasste Entfernung zum Reihen- bzw. Feldende bzw. -anfang ist, so dass bei einer seitens der Erntemaschine erfassten geringen Entfernung zum Reihen- bzw. Feldende bzw. -anfang die Fahrgeschwindigkeitsregelung mittels des Vorfahrtreglers derart begrenzt wird, dass beispielsweise vor der Einfahrt in ein Feld bzw. eine Reihe die Fahrgeschwindigkeit mittels des Vorfahrtreglers nicht stark erhöht wird, so dass sobald das Feld bzw. die Reihe beginnt, die Erntemaschine stark abgebremst werden muss. Weiterhin wird beispielsweise kurz vor dem Ende des Feldes bzw. der Relhe die Fahrgeschwindigkeit auch bei einer geringfügig ansteigenden Erntegutmenge nicht verlangsamt, da es sonst am Feld- bzw. Reihenende zu einer starken Beschleunigung der Erntemaschine kommen würde. Somit begrenzt die erfasste Entfernung die Fahrgeschwindigkeitsregelung mittels des Vorfahrtreglers.

Zusätzlich oder alternativ ist der die Fahrgeschwindigkeitsregelung mittels des Vorfahrtreglers begrenzende Erntegutparameter der den Arbeitsorganen der Erntemaschine zugeführte Erntegutdurchsatz, so dass beispielsweise bei Erreichen einer definierten maximalen Erntegutmenge der Vorfahrtregler die Fahrgeschwindigkeit der Erntemaschine nicht weiter erhöht, obwohl beilspielsweise bei der Motorleistung noch Reserven vorhanden wären. Somit begrenzt der Erntegutdurchsatz die Fahrgeschwindigkeitsregelung.

Zusätzlich oder alternativ ist der die Fahrgeschwindigkeitsregelung mittels des Vorfahrtreglers begrenzende Erntegutparameter der Anteil der sich in einer Überkehreinrichtung der Erntemaschine befindlichen Erntegutkörner, so dass beispielsweise bei einem sich erhöhenden Abteil an Erntegutkörnern in der Überkehreinrichtung ab einer definierten Regelgrenze die Fahrgeschwindigkeit mittels des Vorfahrreglers nicht weiter erhöht wird, damit Sich der Anteil an Erntegutkörnern in der Überkehreinrichtung nicht noch weiter erhöht.

Zusätzlich oder alternativ ist der die Fahrgeschwindigkeitsregelung mittels des Vorfahrtreglers begrenzende Erntegutparameter das Volumen der sich in einer Überkehreinrichtung der Arbeitsmaschine befindlichen Erntegutmenge, so dass belspielsweise bei einem sich erhöhenden Volumen an Erntegutmenge in der Über kehreinrichtung ab einer definierten Regelgrenze die Fahrgeschwindigkeit mittels des Vorfahrtreglers nicht weiter erhöht wird, damit sich das Volumen an Erntegutmenge in der Überkehreinrichtung nicht noch weiter erhöht.

In einer vorteilhaften Ausgestaltung ist die selbstfahrende landwirtschaftliche Erntemaschine als Mähdrescher ausgebildet.

Anhand der beigefügten Zeichnung wird die Erfindung nachfolgend naher erläutert. Es zeigt:
Fig. 1: eine Seitenansicht einer als Mähdrescher ausgebildeten Erntemaschine,
Fig. 2: ein Flussdiagramm der erfindungsgemäßen Arbeitsparameteranpassung und
Fig. 3: ein Flussdiagramm einer beispielhaften Arbeitsparameteranpassung.

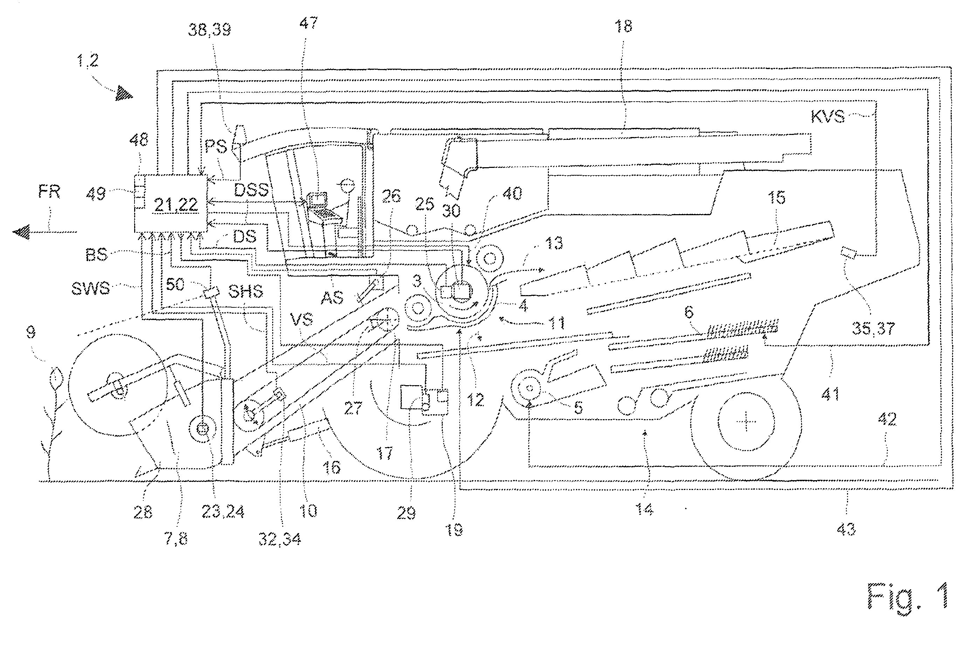

Die in Fig.1 dargestellte, als Mähdrescher 1 ausgeführte selbstfahrende landwirtschaftliche Erntemaschine 2 nimmt frontseitig ein als Schneidwerk 7 ausgeführtes Vorsatzgerät 8 auf, welches das auf dem Fels gewachsene Erntegut 9 mäht und anschließend einem Schrägförderer 10 zuführt. Der Schrägförderer 10 übergibt das Erntegut 9 an ein nachgeschaltetes Dreschwerk 11, welches das Erntegut 9 aufbereitet, wobei es in ein Korn-Spreu-Gemisch 12 und ein aus ausgedroschenen Halmen bestehenden Gutstrom 13 geteilt wird. Das Korn-Spreu-Gemisch 12 wird zu einer Reinigungseinrichtung 14 gefördert, die die Körner von den Nichtkornbestandteilen, d. h. von Halm- und Spreuteilen trennt. Der aus ausgedroschenen Halmen bestehende Gutstrom 13 gelangt auf eine als Hordenschüttler 15 ausgebildete Abscheideeinrichtung, der den Gutstrom 13 in den rückwärtigen Bereich des Mähdreschers 1 fördert und dabei im Gutstrom 13 vorhandene Körner, Kurzstroh und Spreu abtrennt, die ebenfalls der Reinigungseinrichtung 14 zugeführt werden. Es liegt im Rahmen der Erfindung, dass die Abscheideeinrichtung auch als Axialrotor ausgebildet sein kann. Ebenso liegt es im Rahmen der Erfindung, dass das Dreschwerk und die abscheideeinrichtung als miteinander verbundener Axialrotor ausgebildet sein kann.

Der Schrägförderer 10 wird Über Hubzylinder 16 die gehäuseseitig schwenkbeweglich am Mähdrescher 1 und kolbenstangenseitig schwenkbeweglich mit dem Schrägförderer 10 verbunden sind um eine quer zur Fahrtrichtung FR angeordnete Schwenkachse 17 verschwenkbar geführt. Der Mähdrescher 1 weist einen Verbrennungsrnotor 18 auf, der einen Fahrantrieb 19 zum Antrieb der Vorderräder 20 des Mähdreschers 1, einen Dreschwerkantrieb zum Antrieb des Dreschwerks 11 und einen Schneidwerksantrieb zum Antrieb des Schneidwerks 7 antreibt.

Der Fahrantrieb 19 ist mit einem Vorfahrtregler 21 ausgestattet, der die Fahrgeschwindigkeit des Mähdreschers 1 durchgängig selbsttätig regelt Der Vorfahrtregler 21 weist eine Steuer- und Regeleinheit 22 auf, die mit mehreren Sensoren 23, 25, 26, 29, 30, 34, 37, 39, 50 in Verbindung steht, die am Mähdrescher 1 und am Schneidwerk 7 angeordnet sind.

Am vorderen Ende des Schneidwerks 7 ist ein Bestandssensor 50 angeordnet, der den in Fahrtrichtung FR vor dem Mähdrescher 1 liegenden Bestand sensiert. Der Bestandsensor 50 generiert in Abhängigkeit vom Feldbewuchs Bestandssignale BS. Ein weiterer Sensor 25 überwacht einen Ein/Aus-Schalter für das Dreschwerk 11 und generiert in Abhängigkeit vom Betriebsstatus des Dreschwerks 11 ein Dreschwerksignal DS. Ein weiterer Sensor 23 überwacht einen Ein/Aus-Schalter 24 für das Schneidwerk 7 und generiert in Abhängigkeit vom Betriebsstatus des Schneidwerks 7 ein Schneidwerkssignal SWS.

Ein Drehwinkelsensor 26 ist in der Schwenkachse 17 des Schrägförderers 10 gangeordnet und detektiert auf an sich bekannte Weise einen Verdrehwinkel 27 zwischen dem Schrägförderer 10 und dem Mähdrescher 1. Der Drehwinkelsensor 26 generiert bei einem bestimmten Verdrehwinkel 27, bei dem das Schneidwerk 7 eine Arbeitsposilion 28 einnimmt, ein Arbeitspositionssignal AS.

Am Fahrantrieb 19 ist ein Drehzahlsensor 29 angeordnet, der auf an sich bekannte Weise die Fahrgeschwindigkeit und die Fahrtrichtung FR des Mähdreschers 1 detektiert. Der Drehzahlsensor 29 generiert proportional zur Fahrgeschwindigkeit bel Vorwärtsfahrt des Mähdreschers 1 ein Fahrgeschwindigkeitssignal VS. Ein Durchsatzsensor 30 ist auf an sich bekannte Weise an dem Dreschwerkantrieb angeordnet und detektiert ein Dreschtrommeldrehmoment, das abhängig vom Erntegutdurchsatz durch das Dreschwerk 11 ist. Der Durchsatzsensor 30 generiert proportional zum Erntegutdurchsatz durch das Dreschwerk 7 ein Durchsatzsignal DSS. Der Schrägförderer 10 weist eine an sich bekannte Schichthöhenerfssungseinrichtung 32 auf, die die Schichthöhe des Erntegutes im Schrägförderer 10 detektiert. Die Schichthöhenerfassungseinrichung 32 weist einen Sensor 34 auf, der ein Schichthöhensignal SHS generieren, das proportional zur Schichthöhe ist.

Am Ende des Hordenschüttlers 15 ist eine Körnerstrommesseinrichtung 35 angeordnet, die einen Abscheideverlust im Gutstrom 13 sensiert. Die Körnerstrommesseinrichtung 35 weist mehrere Klopfsensoren 37 auf, die auf an sich bekannte Weise Kornverlustsignale KVS generieren, die proportional zum Abscheideverlust sind. Der Mähdrescher ist zusätzlich mit einer Ortungseinrichtung 38 ausgestaltel; die die Position des Mähdreschers 1 sensiert. Die Ortungseinrichtung 38 weist Sensoren 39 auf, die ein Positionssignal PS generieren, das abhängig vom Standort des Mähdreschers 1 ist.

Die Steuer- und Regeleinrichtung 22 vergleicht die von den Sensoren 34 erzeugten Schichthöhensignale SHS mit einer vorgegebenen minimalen Schichthöhe. Ist die ermittelte Schichthöhe gleich groß oder größer als die minimale Schichthöhe, generiert die Steuer- und Regeleinheit 22 ein Einsatzbetriebssignal, welches an den Vorfahrtregler 21 Übermittelt wird. Bei Empfang des Einsatzbetriebssignals erkennt der Vorfahrtregler 21, das der Mähdrescher 1 sich im Einsatzbeitrieb befindet, empfängt der Vorfahrtregler 21 kein Einsatzbetriebsignal erkennt der Verfahrtregler 21, dass sich der Mähdrescher im Leerbetrieb befindet.

Um die Qualität der Erkennung zu erhöhen, ist eine Ausführung denkbar bei der der Vorfahrtregler 21 beispielsweise den Einsatzbetrieb und den Leerbetrieb nur dann erkennt, wenn weitere Einsatzbetriebssignale an den Vorfahrtregler 21 Übermittelt werden.

Die Steuer- und Regeleinheit 22 vergleicht das von dem Sensor 25 erzeugte Dreschwerksignal DS mit einem vorgegebenen Einschaltwert und ermittelt damit den Betriebszustand des Dreschwerks 11. Ist das Dreschwerk 11 eingeschaltet, generiert die Steuer- und Regeleinheit 22 ein erstes Einsatzbetriebssignal.

Ebenso ist es denkbar, das die Steuer- und Regeleinheit 22 das von dem Sensor 23 erzeugte Schneidwerksignal SWS mit einem Einschaltwert für das Schneidwerk 7 vergleicht und damit den Betriebszustand des Schneidwerks 7 ermittelt. Ist das Schneidwerk 7 eingeschaltet generiert die Steuer- und Regeleinheit 22 ein zweites Einsatzbetriebssignal.

Vorstellbar ist auch, das die Steuer- und Regeleinheit 22 das von dem Drehwinkelsensor 26 erzeugte Arbeitspositionssignal AS mit einem vorgegebenen Arbeitspositionswert vergleicht und dadurch die Arbeitsposition 28 des Schneldwerks 7 ermittelt. Steht das Schneidwerk 7 in der Arbeitsposition 28, generiert die Steuer- und Regeleinheit 22 ein drittes Einsatzbetriebssignal.

Weiterhin ist es möglich das die Steuer- und Regeleinrichtung 22 die von dem Drehzahlsensor 29 erzeugten Fahrgeschwindigkeitssignale VS mit einem Fahrgeschwindigkeitsollvert vergleich und erkennt, ob sich der Mähdrescher 1 mit einer minimalen Fahrgeschwindigkeit bewegt. Ist die Fahrgeschchwindigkeit des Mähdreschers 1 gleich groß oder größer als die minimale Fahrgeschwindigkeit, generiert die Steuer- und Regeleinheit 22 ein viertes Einsatzbetriebssignal.

In einer weiteren Ausführung der Erfindung ist denkbar, das der Vorfahrtregler 21 Über die Steuer- und Regeleinheit 22 mit dem Bestandsensor 50 verbunden ist und der Vorfahrtregler 21 in Abhängigkeit von den von dem Bestandssensor 50 generierten Bestardsignalen BS erkennt, ob sich der Mähdrescher 1 im Bestand oder außerhalb des Bestandes bewegt, das heißt ob sich der Mähdrescher 1 im Leerbetrieb oder im Einsatzbetrieb befindet,

Ebenso ist es vorstellbar, dass der Vorfahrtregler 21 mit der Ortungsvorrichtung 38 verbunden ist und der Vorfahrtregler 21 in Abhängigkeit von dem bereits zurückgelegten Fahrweg sowie der Schnittbreite des Schneidwerks 7 und einer Schlagkarte erkennt, ob sich der Mähdrescher im Leerbetrieb oder im Einsatzbetrieb befindet. Wenn der Vorfahrtregler 21 erkennt, dass sich der Mähdrescher 1 im Einsatzbetrieb befindet, regelt der Vorfahrtregler 21 die Fahrgeschwindigkeit in Abhängigkeit von einem Erntegutparameter wie beispielsweise den von der Körnerstrommesseinrichtung 35 ermittelten Abscheideverlusten und/oder einem Arbeitsparameter des Mähdreschers 1 wie beispielsweise der Schichthöhe im Schrägförderer 10.

Über eine Steuer-, Bedien- und Anzeigeeinheit 22.47 die mit dem Vorfahrtregler 21 verbunden ist, gibt der Fahrer eine Kornverlustgrenze 48 vor, mit der der Vorfahrtregler 21 eine Sollschichthöhe für den Schrägförderer 10 berechnet. Der Vorfahrtregler 21 regelt die Fahrgeschwindigkeit derart, dass die Schichthöhe die berechnete Sollschichthöhe 49 erreicht. Der Vorfahrtregler 21 vergleicht den Abscheideverlust mit der Komverlustgrenze 48. ist der Abscheideverlust über einen bestimmten Zestraum hinaus größer als die Kornverlustgrenze 48 wird die Fahrgeschwindigkeit vermindert. bis der Abscheideveriust der Kornverlustgrenze 48 entspricht und zugleich wird eine neue Sollschichthöhe 49 festgelegt Wenn der Abscheideverlust über einen vorgegebienen Zeitraum kleiner ist als die Kornverlustgrenze 48 wird die Fahrgeschwindigkeit erhöht, bis der Abscheideverlust der Kornverlustgrenze 48 entspricht. Der Vorfahrtregler 21 aktualisiert die Schichthöhe durch Änderung der Fahrgeschwindigkeit während des Einsatzbetriebes kontinuierlich, um sich an die unterschiedlichen Erntebedingungen anzupassen.

Nun ist es im Erntebetrieb so, dass die Fahrgeschwindigkeitsregelung mittels des Vorfahrtreglers 21 bei bestimmten Erntegutparametern und/oder Arbeitsparametern begrenzt ist, und der Vorfahrtregler 21 nicht die Fahrgeschwindigkeit ändern kann, um eine Soilschichithöhe 49 des Erntegutes 9 im Schrägförderer 10 zu erzielen. Diese begrenzend wirkenden Erntegutparameter und Arbeitsparameter können beispielsweise die maximal zulässige Fahrgeschwindigkeit und/oder die Motorauslastung und/oder der Zustand eines oder mehrerer Arbeitsaggregate und/oder der Zustand eines oder mehrerer Arbeitsmedien und/oder die Reinigungsleistung der Reinigungseinrichtung 14 und/oder die Abscheideleistung der Abscheideeinrichtung und/oder ein Überisdeprozess des Erntegutes 9 in ein externes Transportfahrzeug und/oder die seitens des Mähdreschers 1 erfasste Entfernung zum Reihen-bzw. Feldende bzw, -anfang und/oder der den Arbeitsorganen zugeführte Erntegutdurchsalz und/oder der Anteil der sich in einer Überkehreinrichtung des Mähdreschers 1 befindlichen Erntegutkörner und/oder das Volumen der sich in einer Überkehreinrichtung des Mähdreschers 1 befindlichen Erntegutmenge. Da die Schichthöhe des Erntegules 9 im Schrägförderer 10 in einem solchen Fall, nicht mittels der Fahrgeschwindig-Keitsänderung an die Solischichichthöhe 49 angepasst werden kann, wird die Schichthöhe und somit der Erntegutdurchsatz des Mähdreschers 1 ansteigen oder sie verringert sich. Um trotz des variierenden Erntegutdurchsatzes ein optimales Arbeitsergebnis zu erzielen, greift die Streuer- und Regeleinheit 22 erfindungsgemäß derart ein, dass automatisch zumindest ein Arbeitsparameter zumindest eines Arbeitsorgans des Mähdreschers 1 an den jeweils aktuellen Erntegutdurchsatz angepasst wird.

Sollte sich beispielsweise die Schichthöhe im Schrägförderer 10 erhöhen, so würde diese seitens der Schichthöhenerfassungseinrichtung 32 erfaßte als Schichthöhensignals SHS an die Steuer- und Regeleinheit 22 weitergeleitet. Daraufhin berechnet die Steuer- und Regeleinheit 22 den aktuellen Ernteguldurchsatz und sendet automatisch beispielsweise ein entsprechendes Steuersignal 40 an den hier nicht dargestellten Antrieb der Dreschtrommel 3, um die Drehzahl der Dreschtrommel 3 zu erhöhen. Aufgrund der erhöhten Drehzahl ist trotz des gestiegenen Erntegutdurchsatz ein effektives Ausdreschen der Erntegutkörner aus dern Erntegut 9 gewährleistet.

Zusätlich oder alternativ sendet die Steuer- und Regeleinheit 22 automatisch beispielsweise ein entsprechendes Steuersignal 43 an den hier nicht dargestellten Antrieb des Dreschkorbes 4, um den Abstand zwischen der Dreschtrommel 3 und dem Dreschkorb 4 zu vergrößern. Aufgrund des vergrößerten Abstandes ist trotz des gestiegenen Erntegutdurchsatz ein effektives Ausdreschen der Erntegutkörner aus dem Erntegut 9 gewährleistet.

Zusätzlich oder alternativ sendet die Steuer- und Regeleinheit 22 automatisch beispielsweise ein entsprechendes Steuersignal 42 an den hier nicht dargestellten Antrieb eines Gebläses 5 der Reinigungseinnchtung 14, um die Drehzahl des Gebläses 5 zu erhöhen. Aufgrund der erhöhten Drehzahl ist trotz des gestiegenen Erntegutdurchsatz ein effektives Reinigen der Erntegutkörner aus dem in der Reinigungseinrichtung 14 befindlichen Korn-Spreu-Gemisch 12 gewährleistet.

Zusätzlich oder alternativ sendet die Steuer- und Regeleinheit 22 automatisch beispielsweise ein entsprechendes Steuersignal 41 an den hier nicht dargestellten Antrieb einer Verstelleinrichtung der Sieböffnungsweite der Siebe 6 der Reinigungseinrichtung 14, um die Sleböffnungsweite des Siebes 6 zu vergrößern. Aufgrund der größeren Sieböffnungsweite ist trotz des gestiegenen Erntegutdurchsalz ein effektives Reinigen der Erntegutkörner aus dem in der Reinigungseinrichtung 14 befindlichen Korn-Spreu-Gemisch 12 gewährleistet.

Sollte sich beispielsweise die Schichthöhe im Schrägförderer 10 verringern, so würde diese seitens der Schichthöhenerfassungseinrichtung 32 erfasste information als Schichthöhensignals SHS an die Steuer- und Regeleinheit 22 weitergeleitet. Daraufhin berechnet die Streuer- und Regeleinheit 22 den aktuellen Erntegutdurchsatz und sendet automatisch beispielsweise ein entsprechendes Steuersignal 40 an den hier nicht dargestellten Antrieb der Dreschtrommel 3, um die Drehzahl der Dreschtrommel 3 zu verringern. Aufgrund der verringerten Drehzahl ist trotz des geringeren Erntegutdurchsatzes ein effektives Ausdreschen der Erntegutkörner aus dem Erntegut 9 gewährleistet.

Zusätzlich oder alternativ sendet, die Steuer- und Regeleinheit 22 automatisch beispielsweise ein entsprechendes Steuersignal 43 an den hier nicht dargestellten Antrieb des Dreschkorbes 4, um den Abstand zwischen der Dreschtrommel 3 und dem Dreschkorb 4 zu verkleinern. Aufgrund des verkleinerten Abstandes ist trotz des geringeren Erntegutdurchsatzes ein effektives Ausdreschen der Erntegulkörner aus dem Erntegut 9 gewährleistet,

Zusätzlich oder alternativ sendet die Steuer- und Regeleinheit 22 automatisch beispielsweise ein entsprechendes Steuersignal 42 an den hier nicht dargestellten Antrieb eines Gebläses 5 der Reinigungseinrichtung 14, um die Drehzahl des Gebläses 5 zu verringern. Aufgrund der verringerten Drehzahl ist trotz des geringeren Erntegutdurchsatzes ein effektives Reinigen der Erntegutkörner aus dem in der Reinigungseinrichtung 14 befindlichen Korn-Spreu-Gemisch 12 gewährleistet.

Zusätzlich oder alternativ sendet die Streuer- und Regeleinheit 22 automatisch beispielsweise ein entsprechendes Steuersignal 41 an den hier nicht dargestellten Antrieb einer Verstelleinrichtung der Sieböffnungsweite der Siebe 6 der Reinigungseinrichtung 14, um die Sieböffnungsweite des Siebes 6 zu verkleinem. Aufgrund der kleineren Sieböffnungsweite ist trotz des geringeren Erntegutdurchsatzes ein effektives Reinigen der Erntegutkörner aus dem in der Reinigungseinrichtung 14 befindlichen Korn-Spreu-Gemisch 12 gewährleistet.

Die hier genannten Beispiele stehen für ein Vielzahl von möglichen Arbeitsparameteranpassungen die die Steuer- und Regeleinheit 22 automatisch aufgrund eines geänderten Erntegutdurchsatzes durchführen könnte, wobei der geänderte Erntegutdurchsatz durch eine Begrenzung der Fahrgeschwindigkeitsregelung mittels des Vor fahrtreglers 21 bedingt ist.

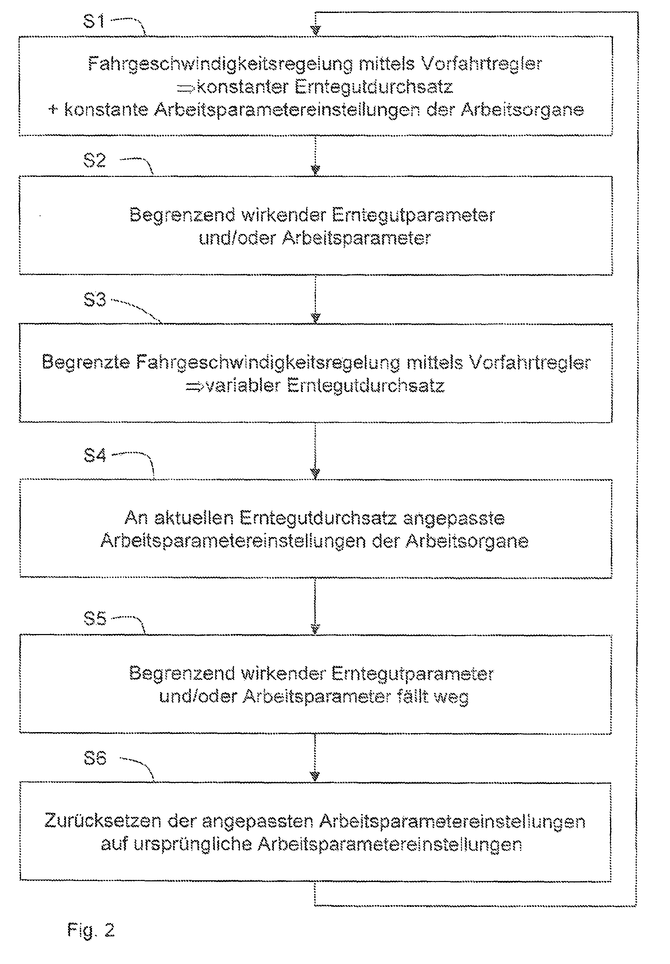

In Figur 2 ist ein Flussdiagramm der erfindungsgemäßen Arbeitsparameteranpassung dargestellt. Im Schritt S1 erfolgt die Fahrgeschwindigkeitsregelung mittels des Vorfahrtreglers derart, dass die Fahrgeschwindigkeit immer so geregelt wird, dass ein konstanter Erntegutdurchsatz in die Erntemaschine gefördert wird, so dass die Arbeitsparametereinstellungen der Arbeitsorgane der Erntemaschine konstant bleiben können.

Nun kann es während der Ernteprozesses durch unterschledliche Erntegutparameter und/oder Arbeitsparameter vorkommen, dass ein Arbeitsorgan der Erntemaschine, trotz eines konstanten Erntegutdurchsatzes, an eine definierte Leistungsgrenze stöße. Somit wirkt der Erntegutparameter und/oder Arbeitsparameter gemäß Schritt S2 begrenzend auf die Fahrgeschwindigkeitsregelung.

Nun regelt der Vorfahrtregler in Schritt S3 die Fahrgeschwindigkeit der Erntemaschine entsprechend der Begrenzung, so dass sich ein variabler Erntegutdurchsatz ergibt.

Da die Arbeitsparameter der Arbeitsorgane der Erntemaschine auf den konstanten Erntegutdurchsatz optimiert eingestellt sind, werden in Schritt S4 die Arbeitsparametereinstellungen der Arbeitsorgane an den aktuellen Erntegutdurchsstz angepasst, um trotz des geänderten Erntegutdurchsatzes ein optimales Arbeitsergebnis der Erntemaschine zu erzielen.

Aufgrund der angepassten Fahrgeschwindigkeitsregelung mittels des Vorfahrtreglers kommt es in Schritt S5 dazu, dass das Arbeitsorgan nicht mehr an der Leistungsgrenze betrieben wird, so dass der begrenzend wirkende Erntegutparameter und/oder Arbeitsparameter wegfällt.

Um die Fahrgeschwindigkeitsregelung mittels des Vorfahrtreglers nun wieder uneingeschränkt betreiben zu können, werden in Schritt S6 die angepassten Arbeitsparametereinstellungen wieder auf die ursprünglichen Arbeitsparametereinstellungen zurücksesetzt.

Nun erfolgt gemäß Schritt St wieder die selbsttätige Fahrgeschwindigkeitsregelung mittels des Vorfahrtreglers um einen konstanten Erntegufdurchsatz zu erzielen. Erst wenn wieder ein Arbeitsorgan aufgrund von Erntegutparametern und/oder Arbeitsparametern an eine definierte Leistungsgrenze stößt, werden die Schritte S2 bis S6 erneut durchlaufen.

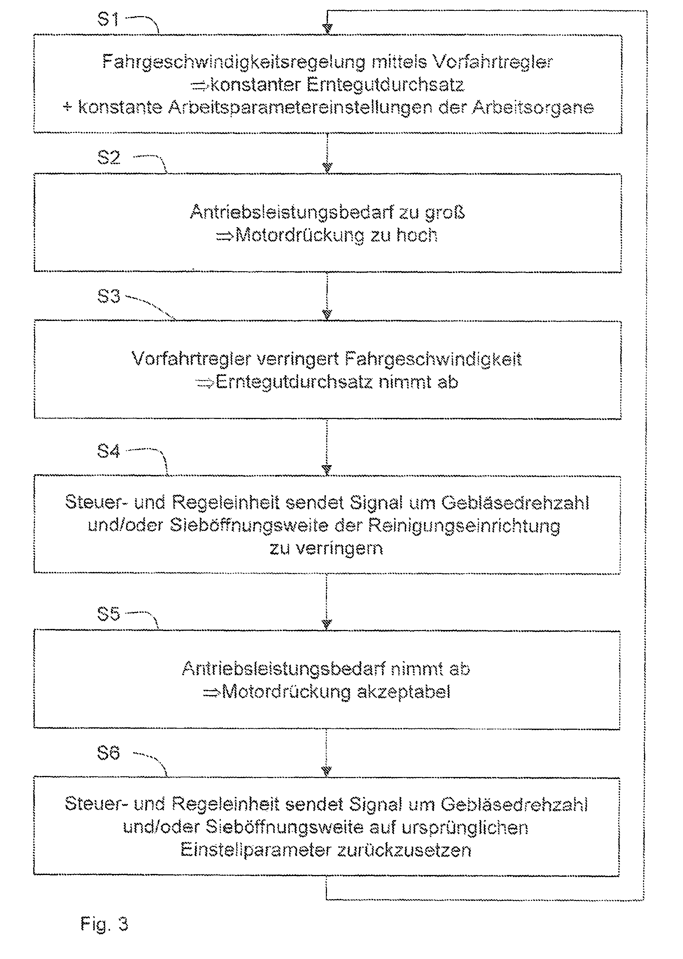

In Figur 3 ist ein Flussdiagramm der in Figur 2 dargestellten erfindungsgemäßen Arbeitsparameteranpassung an einem konkreten Beispiel einer als Mähdrescher ausgebildeten Erntemaschine dargestellt.

Im Schritt S1 erfolgt die Fahrgeschwindigkeitsregelung mittels des Vorfahrtreglers derart, dass die Fahrgeschwindigkeit immer so geregelt wird, dass ein konstanter Erntegutdurchsatz in den Mähdrescher gefördert wird, so dass die Arbeitsparametereinstellungen der Arbeitsorgane des Mähdreschers konstant bleiben können. Unter Arbeitsparametereinstellungen sind hier beispielsweise die Dreschtrommeldrehzahl, der Abstand zwischen Dreschtrommel und Dreschkorb, die Gebläsedrehzahl des Reinigungsgebläses der Reinigungseinrichtung, die Öffnungsweite der Siebe der Reinigungseinrichtung und/oder die Drehzahl eines Abscheide- oder Dresch/Abscheiderotors zu verstehen, wobei diese Aufzählung nicht als abschließend und nicht einschränkend anzusehen ist.

Wenn nun die eingestellte Menge des konstanten Erntegutdurchsatzes sehr hoch ist, bedingt dieses eine hohe Leistungsaufnahme der einzelnen Arbeitsorgane des Mähdreschers, da sie dauerhaft einen hohen Erntegutdurchsatz verarbeiten müssen. Um einen hohen Erntegutdurchsatz in die Erntemaschine zu befördern, regelt der Vorfahrtregler die Fahrgeschwindigkeit entsprechend hoch, was wiederum einen hohen Leistungsbedarf der Antriebseinheit des Mähdreschers bedingt. Somit ist der Verbrennungsmotor einem hohen Leistungsbedarf ausgesetzt, wodurch seine Drehzahl absinkt. Dieser Vorgang wird als Motordrückung bezeichnet. Nun kann es während des Ernteprozesses aufgrund eines hügeligen Feldes dazu kommen, dass der Mähdrescher an einer Steigung hochfahren muss. Dies erfordert aufgrund des Gewichtes des Mähdreschers eine zusätzliche Leistung der Antriebseinheit um die Fahrgeschwindigkeit und somit den Erntegutdurchsatz konstant zu halten. Aufgrund der sowieso bereits vorhandenen Motordrückung kann es jetzt in Schritt S2 dazu kommen, dass dieser zusätzliche Leistungsbedarf dazu führen würde, dass der Verbrennungsmotor droht aufgrund zu geringer Drehzahl abgewürgt zu werden. Somit ist die zur Verfügung stehende Antriebsleistung des Verbrennungsmotors der begrenzend wirkende Arbeitsparameter für die Fahrgeschwindigkeitsregelung mittels des Vorfahrtreglers.

Um einem möglichen Abwürgen des Verbrennungsmotors entgegenzuwirken, verringert der Vorfahrtregler in Schritt S3 die Fahrgeschwindigkeit, so dass der Erntegutdurchsatz abnimmt. Aufgrund der geringeren Geschwindigkeit und des geringeren Erntegutdurchsatzes wird der erforderliche Leistungsbedarf verringert.

Da die Gebläsedrehzahl und die Sieböffnungsweite der Reinigungseinrichtung jedoch auf einen höheren Erntegutdurchsatz eingestellt sind, würde dies bei sich verringerndem Erntegutdurchsatz beispielsweise bedeutet, dass eine größere Erntegutmenge und somit auch Erntegutkörner durch den starken Gebläseluftstrom aus der Reinigungseinrichtung auf den Feldboden geblasen würden. Um diesem erhöhten Verlust entgegenzuwirken sendet die Streuer- und Regeleinheit in Schritt S4 ein Signal, um die Gebläsedrehzahl und/oder die Sieböffnungsweite automatisch zu verringern und somit an den aktuellen Erntegutdurchsatz anzupassen.

Sobald nun die Fahrt an der Steigung beendet ist und der abzuerntende Feldboden wieder in einer horizontalen Ebene liegt, nimmt der Antriebsleistungsbedarf der Antriebseinheit gemäß Schritt S5 automatisch wieder ab und die Motordrückung liegt wieder in einem akzeptablen Bereich. Somit ist die zur Verfügung stehende Antriebsleistung des Verbrennungsmotors nicht mehr der begrenzend wirkende Arbeitsparameter für die Fahrgeschwindigkeitsregelung mittels des Vorfahrtregsers.

Aufgrund des Wegfalls des begrenzend wirkenden Arbeitsparameters sendet die Steuer- und Regeleinheit in Schritt S6 ein Signal, um die Gebläsedrehzahl und/oder die Sieböffnungsweite wieder auf die ursprünglichen Einstellparameter zurückzusetzen.

Nun erfolgt gemäß Schritt S1 wieder die selbsttätige Fahrgeschwindigkeitsregelung mittels des Vorfahrtreglers um einen gewünschten konstanten Ernteguidurchsatz zu erzielen, was im konkreten Beispiel bedeutet, dass die Fahrgeschwindigkeit wieder erhöht wird, um den Erntegutdurchsatz zu erhöhen, Erst wenn wieder ein Arbeitsorgan aufgrund von Erntegutparametern und/oder Arbeitsparametern an eine definierte Leistungsgrenze stößt, werden die Schritte S2 bis S6 erneut durchlaufen.

Es liegt im Rahmen der Erfindung, das der zu Figur 3 beschriebene Ablauf auf eine Vielzahl von möglichen begrenzend wirkenden Erntegutparametern und/oder Arbeitsparametern, sowie auf eine Violzahl von möglichen Arbeitsparameteranpassungen übertragbar ist, so das das beschriebene Beispiel nicht als Einschränkend für die Erfindung anzusehen ist.

### Bezugszeichenliste:

- 1: Mähdrescher
- 2: Erntemaschine
- 3: Dreschtrommel
- 4: Dreschkorb
- 5: Gebläse
- 6: Sieb
- 7: Schneidwerk
- 8: Vorsatzgerät
- 9: Erntegut
- 10: Schrägförderer
- 11: Dreschwerk
- 12: Korn-Spreu-Gemisch
- 13: Gutstrom
- 14: Reinigungseinrichtung
- 15: Hordenschüttler
- 16: Hubzylinder
- 17: Schwenkachse
- 18: Verbrennungsmotor
- 19: Fahrantrieb
- 20: Vorderräder
- 21: Vorfahrtregler
- 22: Steuer- und Regeleinheit
- 23: Sensor
- 24: Ein/Aus-Schalter
- 25: Sensor
- 26: Drehwinkelsensor
- 27: Verdrehwinkel
- 28: Arbeitsposition
- 29: Drehzahlsensor
- 30: Durchsatzsensor
- 32: Schichthöhenetfassungseinrichtung
- 34: Sensor
- 35: Kömerstrommesseinrichtung
- 37: Klopfsensor
- 38: Ortungseinrichtung
- 39: Sensor
- 40: Steuersignal
- 41: Steuersignal
- 42: Steuersignal
- 43: Steuersignal
- 47: Anzeigeeinheit
- 48: Kornvertustgrenze
- 49: Solischichthöhe
- 50: Bestandssensor
- FR: Fahrtrichtung
- BS: Bestandssignal
- DS: Oreschwerksignal
- SWS: Schneidwerksignal
- AS: Arbeitspositionssignal
- VS: Fahrgeschwindigkeitssignal
- DSS: Durchsatzsignal
- SHS: Schichthöhensignal
- KVS: Kornverlustsignal
- PS: Positionssignal
- S1: Schritt
- S2: Schritt
- S3: Schritt
- S4: Schritt
- S5: Schritt
- S6: Schritt

## Patentansprüche

1. Selbstfahrende landwirtschaftiche Erntemaschine (2) mit Arbeitsorganen deren Arbeitsparameter einstellbar sind und die mit einer Fahrgeschwindigkeit bewegt wird, wobei die Fahrgeschwindigkeit in Abhänglgkeit von wenigstens einem Erntegutparameter und/oder einern Arbeitsparameter der Erntemaschine (2) mittels eines Vorfahrtreglers (21) selbsttätig geregelt wird, wobei die selbsttätige Fahrgeschwindigkeitsregefung mittels des Vorfahrtreglers (21) zeitweise in Abhängigkeit von bestimmten Erntegutparametern und/oder Arbeitsparametern begrenzt wird,
**dadurch gekennzeichnet**
**dass** eine Steuer- und Regeleinheit (22) der Erntemaschine (2) im Falle einer begrenzten Fahrgeschwindigkeitsregelung automatisch zumindest einen Arbeitsperameter zumindest eines Arbeitsorgans an einen aufgrund der begrenzten Fahrgeschwindigkeitsregelung geänderten Erntegutdurchsatz anpasst.

2. Selbstfahrende landwirtschaftliche Erntemaschine (2) nach Anspruch 1 , **dadurch gekennzeichnet, dass** die Steuer- und Regeleinheit (22) automatisch eine Mehrzahl von Arbeitsparametern von einer Mehrzahl von Arbeitsorganen an den geänderten Erntegutdurchsatz anpasst.

3. Selbstfahrende landwirtschaftliche Erntemaschine (2) nach einem der vorstehenden Ansprüche, **dadurch gekennzeichnet dass** die Steuer- und Regeleinheit (22) nach der Beendigung der begrenzten Fahrgeschwindigkeitsregelung automatisch den zumindest einen angepassten Arbeitsparameter des zumindest einen Arbeitsorgans wieder auf den ursprünglich eingestellten Parameterwert zurücksetzt.

4. Selbstfahrende landwirtschsftliche Erntemaschine (2) nach einem der vorstehenden Ansprüche, **dadurch** das die Steuer- und Regeleinheit (22) automatisch insbesondere den Arbeitsparameter des zumindest einen Arbeitsorgans an einen geänderten Erntegutdurchsatz anpasst, der aufgrund der Erntegutparameter und/oder Arbeitsparameter begrenzend für die Fahrgeschwindigkeitsregelung mittels des Vorfahrtreglers (21) wirkt.

5. Selbsifahrende landwirtschaftliche Erntemaschine (2) nach einem der vorstehenden Ansprüche, **dadurch gekennzeichnet, dass** dem Bediener der Erntemaschine (2) in einer Anzeigeeinheit (47) unmittelbar der Erntegutparameter und/oder der Arbeitsparameter angezeigt wird, der aktuell die Fahrgeschwindigkeitsregelung mittels des Vorfahrtreglers (21) begrenzt.

6. Selbstfahrende landwirtschaftliche Erntemaschine (2) nach einem der vorstehetenden Ansprüche, **dadurch gekennzeichnet, dass** dem Bediener der Erntemaschine (2) einer Anzeigeeinheit (47) unmittelbar der Arbeitsparameter angezeigt wird, der aktuell mittels der Streuer- und Regeleinheit (22) automatisch an den aufgrund der begrenzten Fahrgeschwindigkeitsregelung geänderten Erntegutdurchsatz anpasst wird.

7. Selbstfahrende landwirtschaftliche Erntemaschine (2) nach einem der vorstehenden Ansprüche, **dadurch gekennzeichnet, dass** der zumindest eine anzupassende Arbeitsparameter die Drehzahl zumindest einer Dreschtommel (3) der landwirtschaftlichen Erntemaschine (2) ist.

8. Selbstfahrende landwirtschaftliche Erntemaschine (2) nach einem der vorstehenden Ansprüche, **dadurch gekennzeichnet, dass** der zumindest eine anzupassende Arbeitsparameter der Abstand zwischen zumindest einer Dreschtrommel (3) und zumindest einem Dreschkorb (4) der landwirtschaftlichen Ernternaschine (2) ist.

9. Selbstfahrende landwirtschaftliche Erntemaschine (2) nach einem der vorstehenden Anspruche, **dadurch gekennzeichnet, dass** der zumindest eine anzupassende Arbeitsparameter die Drehzahl zumindest eines Abscheide- oder Dresch/Abscheiderotors der landwirtschaftlichen Erntemaschine (2) ist.

10. Selbstfahrende landwirtschahftliche Erntemaschine (2) nach einem der vorstehenden Ansprüche, **dadurch gekennzeichnet, dass** der zumindest eine anzupassende Arbeitsparameter die Drehzahl zumindest eines einer Reinigungseinrichtung (14) zugeordneten Gebläses (5) der landwirtschaftlichen Erntemaschine (2) ist.

11. Seibstfahrende landwirtschaftliche Erntemaschine (2) nach einem der vorstehenden Ansprüche, **dadurch gekennzeichnet, dass** der zumindest eine anzupassende Arbeitsparameter die öffnungsweite zumindest eines einer Reinigungseinrichtung (14) zugeordneten Siebes (6) der landwirtschaftlichen Erntemaschine (2) ist.

12. Sebstfahrende landwirtschaftliche Erntemaschine (2) nach einem der vorstehenden Ansprüche, **dadurch gekennzeichnet, dass** der die Fahrgeschwindigkeitsregelung mitten des Vorfahrtregiers (21) begrenzende Erntegutparameter und/oder Arbeitsparameter die Fahrgeschwindigkeit und/oder die Motorauslastung und/oder der Zustand eines oder mehrerer Arbeitsaggregate und/oder der Zustand eines oder mehrerer Arbeitsmedien und/oder die Reinigungsleistung einer Reinigungseinrichtung (14) und/oder die Abscheideleistung einer Erntegutabscheideeinrichtung und/oder sein Überladeprozess des Erntegutes (9) in ein externes Transportfanrzeug und/oder die seitens der Erntemaschine (2) erfasste Entfernung zum Reihen- bzw. Feldende bzw. -anfang und/oder der den Arbeitsorganen zugeführte Erntegutdurchsatz und/oder der Anteil der sich in einer Überkehreinrichtung der Erntemaschine (2) befindlichen Erntegutkörner und/oder das Volumen der sich in einer Überkehreinrichtung der Erntemaschine (2) befindlichen Erntegutmenge ist.

13. Selbsffahrende landwirtschaftliche Erntemaschine (2) nach einem der vorstehenden Ansprüche, **dadurch gekennzeichnet, dass** die Erntemaschine (2) ein Mähdrescher (1) ist.

## Claims

1. A self-propelled agricultural harvester (2) having working members whose working parameters are adjustable and which is moved at a travel speed, wherein the travel speed is automatically regulated in dependence on at least one crop material parameter and/or a working parameter of the harvester (2) by means of a forward travel regulator (21), wherein the automatic travel speed regulation is limited by means of the forward travel regulator (21) in time-wise fashion in dependence on given crop material parameters and/or working parameters,
**characterised in that**
a control and regulating unit (22) of the harvester, in the case of a limited travel speed regulation, automatically adapts at least one working parameter of at least one working member to a crop material throughput which is altered on the basis of the limited travel speed regulation.

2. A self-propelled agricultural harvester (2) according to claim 1 **characterised in that** the control and regulating unit (22) automatically adapts a plurality of working parameters of a plurality of working members to the altered crop material throughput.

3. A self-propelled agricultural harvester (2) according to one of the preceding claims **characterised in that** after the conclusion of the limited travel speed regulation the control and regulating unit (22) automatically resets the at least one adapted working parameter of the at least one working member to the originally set parameter value again.

4. A self-propelled agricultural harvester (2) according to one of the preceding claims **characterised in that** the control and regulating unit (22) automatically adapts in particular the working parameter of the at least one working member to an altered crop material throughput which on the basis of the crop material parameters and/or working parameters acts limitingly for the travel speed regulation by means of the forward travel regulator (21).

5. A self-propelled agricultural harvester (2) according to one of the preceding claims **characterised in that** the crop material parameter and/or the working parameter which currently limits the travel speed regulation by means of the forward travel regulator (21) is displayed directly to the operator of the harvester (2) in a display unit (47).

6. A self-propelled agricultural harvester (2) according to one of the preceding claims **characterised in that** the working parameter which is currently automatically adapted by means of the control and regulating unit (22) to the crop material throughput which is altered on the basis of the limited travel speed regulation is displayed directly to the operator of the harvester (2) in a display unit (47).

7. A self-propelled agricultural harvester (2) according to one of the preceding claims **characterised in that** the at least one working parameter to be adapted is the rotary speed of at least one threshing drum (3) of the agricultural harvester (2).

8. A self-propelled agricultural harvester (2) according to one of the preceding claims **characterised in that** the at least one working parameter to be adapted is the spacing between at least one threshing drum (3) and at least one threshing concave (4) of the agricultural harvester (2).

9. A self-propelled agricultural harvester (2) according to one of the preceding claims **characterised in that** the at least one working parameter to be adapted is the rotary speed of at least one separating or threshing/separating rotor of the agricultural harvester (2).

10. A self-propelled agricultural harvester (2) according to one of the preceding claims **characterised in that** the at least one working parameter to be adapted is the rotary speed of at least one blower (5) of the agricultural harvester (2), that is associated with a cleaning device (14).

11. A self-propelled agricultural harvester (2) according to one of the preceding claims **characterised in that** the at least one working parameter to be adapted is the mesh width of at least one sieve (6) of the agricultural harvester (2), that is associated with a cleaning device (14).

12. A self-propelled agricultural harvester (2) according to one of the preceding claims **characterised in that** the crop material parameter and/or working parameter, limiting the travel speed regulation by means of the forward travel regulator (21), is the travel speed and/or the engine load and/or the condition of one or more working units and/or the condition of one or more working media and/or the cleaning power of a cleaning device (14) and/or the separation power of a crop material separation device and/or a transfer process for the crop material (9) into an external transport vehicle and/or the distance detected on the part of the harvester (2) to the row or field end or beginning and/or the crop material throughput fed to the working members and/or the proportion of the crop material grains disposed in a tailings device of the harvester (2) and/or the volume of the crop material amount disposed in a tailings device of the harvester (2).

13. A self-propelled agricultural harvester (2) according to one of the preceding claims **characterised in that** the harvester (2) is a combine harvester (1).

## Revendications

1. Moissonneuse agricole automotrice (2) comportant des organes de travail possédant des paramètres de travail qui peuvent être réglés et qui se déplace à une vitesse de déplacement, la vitesse de déplacement étant réglée de manière automatique en fonction d'au moins un paramètre du produit de récolte et/ou d'un paramètre de travail de la moissonneuse (2) au moyen d'un régulateur de priorité (21), le réglage automatique de la vitesse de déplacement au moyen du régulateur de priorité (21) étant délimité par intermittence en fonction de paramètres du produit de récolte et/ou de paramètres de travail définis, **caractérisée en ce qu'**une unité de commande et de réglage (22) de la moissonneuse (2), dans le cas d'un réglage délimité de la vitesse de déplacement, adapte de manière automatique au moins un paramètre de travail d'au moins un organe de travail à un débit modifié du produit de récolte sur base du réglage délimité de la vitesse de déplacement.

2. Moissonneuse agricole automotrice (2) selon la revendication 1, **caractérisée en ce que** l'unité de commande et de réglage (22) adapte automatiquement une multitude de paramètres de travail d'une multitude d'organes de travail au débit modifié du produit de récolte.

3. Moissonneuse agricole automotrice (2) selon l'une quelconque des revendications précédentes, **caractérisée en ce que** l'unité de commande et de réglage (22), au terme du réglage délimité de la vitesse de déplacement ramène automatiquement ledit au moins un paramètre de travail adapté dudit au moins un organe de travail à la valeur de paramètre réglée initialement.

4. Moissonneuse agricole automotrice (2) selon l'une quelconque des revendications précédentes, **caractérisée en ce que** l'unité de commande et de réglage (22) adapte automatiquement en particulier le paramètre de travail dudit au moins un organe de travail à un débit modifié du produit de récolte, qui, sur base des paramètres du produit de récolte et/ou des paramètres de travail, a un effet de délimitation pour le réglage de la vitesse de déplacement au moyen du régulateur de priorité (21).

5. Moissonneuse agricole automotrice (2) selon l'une quelconque des revendications précédentes, **caractérisée en ce qu'**est indiqué au préposé à la manoeuvre de la moissonneuse (2) dans une unité d'affichage (47), directement le paramètre du produit de récolte et/ou le paramètre de travail qui procède à la délimitation en vigueur du réglage de la vitesse de déplacement au moyen du régulateur de priorité (21).

6. Moissonneuse agricole automotrice (2) selon l'une quelconque des revendications précédentes, **caractérisée en ce qu'**est indiqué au préposé à la manoeuvre de la moissonneuse (2) dans une unité d'affichage (47), directement le paramètre de travail qui procède à l'adaptation automatique en vigueur au moyen de l'unité de commande et de réglage (22) au débit modifié du produit de récolte sur base du réglage délimité de la vitesse de déplacement.

7. Moissonneuse agricole automotrice (2) selon l'une quelconque des revendications précédentes, **caractérisée en ce que** ledit au moins un paramètre de travail à adapter représente la vitesse de rotation d'au moins un batteur (3) de la moissonneuse agricole (2).

8. Moissonneuse agricole automotrice (2) selon l'une quelconque des revendications précédentes, **caractérisée en ce que** ledit au moins un paramètre de travail à adapter représente la distance s'étendant entre au moins un batteur (3) et au moins un contre-batteur (4) de la moissonneuse agricole (2).

9. Moissonneuse agricole automotrice (2) selon l'une quelconque des revendications précédentes, **caractérisée en ce que** ledit au moins un paramètre de travail à adapter représente la vitesse de rotation d'au moins un rotor de séparation ou d'au moins un batteur longitudinal/rotor de séparation de la moissonneuse agricole (2).

10. Moissonneuse agricole automotrice (2) selon l'une quelconque des revendications précédentes, **caractérisée en ce que** ledit au moins un paramètre de travail à adapter représente la vitesse de rotation d'au moins un ventilateur (5) de la moissonneuse agricole (2), attribué à un mécanisme de nettoyage (14).

11. Moissonneuse agricole automotrice (2) selon l'une quelconque des revendications précédentes, **caractérisée en ce que** ledit au moins un paramètre de travail à adapter représente la largeur d'ouverture d'au moins un crible (6) de la moissonneuse agricole (2), attribué à un mécanisme de nettoyage (14).

12. Moissonneuse agricole automotrice (2) selon l'une quelconque des revendications précédentes, **caractérisée en ce que** le paramètre du produit de récolte et/ou le paramètre de travail délimitant le réglage de la vitesse de déplacement au moyen du régulateur de priorité (21) représente la vitesse de déplacement et/ou la charge du moteur et/ou l'état d'un ou de plusieurs agrégats de travail et/ou l'état d'un ou de plusieurs milieux de travail et/ou la puissance de nettoyage d'un mécanisme de nettoyage (14) et/ou la puissance de séparation d'un mécanisme de séparation du produit de récolte et/ou un processus de surcharge du produit de récolte (9) dans un véhicule de transport externe et/ou l'écartement enregistré à côté de la moissonneuse (2) par rapport à la fin respectivement au début de la ligne respectivement du champ et/ou le débit du produit de récolte acheminé aux organes de travail et/ou la fraction des grains du produit de récolte se trouvant dans un mécanisme de recyclage des otons de la moissonneuse (2) et/ou le volume de la quantité du produit de récolte se trouvant dans un mécanisme de recyclage des otons de la moissonneuse (2).

13. Moissonneuse agricole automotrice (2) selon l'une quelconque des revendications précédentes, **caractérisée en ce que** la moissonneuse (2) est une moissonneuse-batteuse (1).
